# FASCICULE DE BREVET EUROPEEN

(11) **EP 1 641 663 B1**
(45) Date de publication et mention de la délivrance du brevet: **29.04.2009**
(21) Numéro de dépôt: 03776911.4
(22) Date de dépôt: 19.11.2003
(51) Int. Cl.: B60S 1/40

(54) **ESSUIE-GLACE DE VEHICULE COMPORTANT UN BRAS ET UN CONNECTEUR D'ARTICULATION**
KRAFTFAHRZEUGSCHEIBENWISCHER MIT EINEM ARM UND EINEM GELENKTEIL
VEHICLE WINDSCREEN WIPER COMPRISING AN ARM AND AN ARTICULATING CONNECTOR

(30) Priorité: 19.11.2002 FR 0214488
(43) Date de publication de la demande: 05.04.2006
(73) Titulaire: VALEO SYSTEMES D'ESSUYAGE, 78321 La Verrière (FR)
(72) Inventeur: VACHER, Pascal, F-63500 Issoire (FR); ROLLET, Sébastien, F-63260 Aigueperse (FR); FELY, Christophe, F-63570 Lamontgie (FR)
(86) Numéro de dépôt international: PCT/EP2003/012942
(87) Numéro de publication internationale: WO 2004/045931

(56) Documents cités:
- DE-A- 10 039 291
- DE-A- 19 952 054
- US-B1- 6 449 797

## Description

L'invention propose un essuie-glace de véhicule automobile qui comporte un balai d'essuyage de faible encombrement vertical qui est monté articulé à l'extrémité d'un bras d'entraînement.

L'invention propose plus particulièrement un essuie-glace de véhicule automobile qui comporte un balai d'essuyage monté articulé à l'extrémité longitudinale avant d'un bras d'essuie-glace autour d'un axe transversal horizontal par l'intermédiaire d'un connecteur,
dans lequel le connecteur comporte un corps globalement horizontal dont la face inférieure porte des crochets de fixation à un élément de structure du balai qui porte la raclette du balai,
dans lequel la face supérieure du corps du connecteur porte des moyens d'articulation avec l'extrémité du bras autour de l'axe transversal d'articulation,
dans lequel l'extrémité du bras comporte un dos qui s'étend sensiblement horizontalement au-dessus du connecteur et qui porte des moyens d'articulation du connecteur autour de l'axe transversal d'articulation,
dans lequel les moyens d'articulation du connecteur avec l'extrémité du bras comportent au moins un pivot d'axe transversal coaxial à l'axe transversal d'articulation, qui s'étend transversalement depuis une face latérale d'un premier élément de support associé appartenant à l'extrémité du bras ou au connecteur, et qui est apte à être reçu dans un logement complémentaire réalisé dans un deuxième élément de support associé appartenant au connecteur ou à l'extrémité du bras, respectivement,
dans lequel le premier élément de support et/ou le deuxième élément de support comportent des éléments déformables élastiquement pour permettre l'introduction du pivot dans le logement associé et provoquer le verrouillage radial automatique du pivot dans le logement,
dans lequel le premier élément de support et le deuxième élément de support sont réalisés venus de matière par moulage en matière plastique avec le bras ou le connecteur respectivement,
et dans lequel l'extrémité du bras comporte des moyens de positionnement longitudinal du connecteur distincts des moyens d'articulation.

Selon une conception visant à réaliser des essuie-glace de faible hauteur, la structure articulée du balai d'essuie-glace qui porte la raclette ou lame d'essuyage est supprimée et ce sont des éléments de renfort structurels qui sont associées à la lame d'essuyage souple pour constituer le balai d'essuie-glace proprement dit.

Le balai d'essuyage est entraîné en balayage alterné sur la vitre à essuyer par un mécanisme d'entraînement conventionnel qui comporte un bras d'entraînement du balai. Du fait de la forme complexe de la vitre à essuyer, le balai est monté articulé autour d'un axe transversal par rapport au bras d'entraînement, par l'intermédiaire d'un connecteur d'articulation.

Selon un mode de réalisation connu, le connecteur est fixé au balai par l'intermédiaire des éléments structurels, et il est monté articulé par rapport au bras autour d'un axe transversal d'articulation.

Un tel connecteur permettant de relier un balai de faible hauteur à l'extrémité d'un bras d'entraînement est décrit dans le document WO-A-02.34592, et il consiste en une plaque métallique mise en forme par pliage de manière à comporter des moyens de fixation aux éléments structurels du balai, des moyens d'articulation avec le bras d'essuie-glace, et des moyens pour guider le connecteur par rapport au bras d'essuie-glace autour de l'axe d'articulation.

L'extrémité du bras à laquelle le connecteur est articulé comporte des éléments déformables élastiquement qui permettent un assemblage du connecteur avec l'extrémité du bras relativement aisé, aussi appelé "clipsage".

Pour réaliser les fonctions de fixation au balai d'essuyage et d'articulation avec l'extrémité du bras, les différentes parties du connecteur ont chacune une forme spécifique, ce qui rend la réalisation du connecteur par pliage relativement complexe, et augmente son coût de fabrication.

Un autre essuie-glace connu de l'art antérieur est décrit dans le document DE-A1-100.39.291. Le bras comporte des moyens de positionnement longitudinal du connecteur par rapport au bras. Les moyens ont également pour fonction l'articulation du bras par rapport au connecteur. Cependant, le fait d'inclure les deux fonctions respectivement de positionnement et d'articulation dans la même structure ne permet pas d'optimiser la configuration de chacun des moyens séparément.

Le document DE-A-199 52 054 propose, quant à lui, en plus des caractéristiques évoquées initialement, un bras d'essuyage comprenant des éléments pouvant servir à positionner le connecteur par rapport au bras avant l'introduction du pivot du bras dans le logement prévu à cet effet dans le connecteur.

L'invention a pour but de proposer un essuie-glace pour lequel le connecteur est réalisé par des moyens de réalisation présentant un faible coût et permettant d'optimiser à la fois le positionnement du connecteur, aussi bien transversalement que longitudinalement, par rapport au bras et son articulation.

Dans ce but, l'invention propose un essuie-glace du type décrit précédemment et présentant les caractéristiques de la revendication 1.

Selon d'autres caractéristiques de l'invention :
- les moyens de positionnement s'étendent sensiblement transversalement par rapport à la direction longitudinal du bras.
- le connecteur comporte une portion en forme de rampe qui est apte à coopérer avec le bord inférieur d'une nervure pour positionner longitudinalement le connecteur avant l'introduction du pivot dans le logement ;
- le connecteur et le bras comportent des moyens de limitation de l'amplitude du pivotement du balai, et du connecteur, par rapport au bras, autour de l'axe transversal d'articulation ;
- le connecteur comporte au moins une nervure dont une surface supérieure vient en butée contre la face inférieure du dos de l'extrémité du bras pour une position angulaire extrême du balai par rapport au bras ;
- au moins une nervure transversale du bras s'étend verticalement vers le bas de manière que la face supérieure de la raclette vienne en butée contre le bord inférieur de la nervure, pour une position angulaire extrême du balai par rapport au bras ;
- le deuxième élément de support comporte une pince élastique dont les faces internes en vis-à-vis des branches de la pince comportent chacune une portion concave qui délimite en partie le logement, et dont les branches sont globalement articulées autour d'un axe transversal de manière à s'écarter pour permettre l'introduction du pivot dans le logement ;
- les branches de la pince élastique s'étendent globalement verticalement de manière que le pivot soit apte à être introduit verticalement dans le logement associé ;
- le deuxième élément de support consiste en une joue longitudinale verticale qui comporte un orifice transversal de section circulaire délimitant le logement ;
- la joue comporte une portion en forme de rampe qui s'étend depuis le bord longitudinal libre de la joue jusqu'à l'orifice transversal, sur laquelle s'appuie le pivot lors de son introduction dans le logement, pour provoquer la déformation des éléments déformables élastiquement ;
- la joue est déformable élastiquement ;
- l'extrémité libre du pivot est chanfreinée et est apte à coopérer avec la portion en forme de rampe de la joue lors de l'introduction du pivot dans le logement ;
- le deuxième élément de support comporte une face latérale longitudinale verticale avec laquelle coopère une face longitudinale verticale en vis-à-vis appartenant au premier élément de support pour le guidage en rotation du connecteur par rapport à l'extrémité avant du bras ;
- le deuxième élément de support comporte une face latérale longitudinale verticale avec laquelle coopère une face de guidage longitudinale verticale en vis-à-vis appartenant à une nervure pour le guidage en rotation du connecteur par rapport à l'extrémité avant du bras ;
- le deuxième élément de support comporte au moins une joue longitudinale verticale, dont la face latérale en vis-à-vis du premier élément de support associé fait saillie transversalement par rapport à la pince pour former une surface de guidage en rotation ;
- le connecteur comporte deux joues longitudinales verticales réparties longitudinalement de part et d'autre de la pince, et les faces latérales des joues, formant les surfaces de guidage s'étendent longitudinalement de part et d'autre du corps du connecteur ;
- le premier élément de support et la nervure sont répartis transversalement de part et d'autre du deuxième élément de support ;
- le premier élément de support est un élément du connecteur, et le deuxième élément de support est une partie de l'extrémité du bras ;
- la nervure est une partie du connecteur ;
- le premier élément de support est un élément de l'extrémité du bras, et le deuxième élément de support est une partie du connecteur ;
- la nervure est une partie de l'extrémité du bras ;
- le connecteur et l'extrémité du bras sont chacun symétriques par rapport à un même plan longitudinal vertical médian, de manière que le connecteur comporte deux premiers éléments de support ou deux deuxièmes éléments de support, et l'extrémité du bras comporte deux deuxièmes éléments de support
ou deux premiers éléments de support respectivement ;
- la nervure est agencée transversalement entre deux deuxièmes éléments de support.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un essuie-glace comportant un bras et un connecteur;
- la figure 2 est une vue de dessous du bras d'entraînement représenté à la figure 1 ;
- la figure 3a est un détail à plus grande échelle avec arrachement du connecteur et de l'extrémité avant du bras, qui sont représentés avant leur assemblage ;
- la figure 3b est une section suivant un plan transversal vertical passant par l'axe d'articulation du connecteur et du bras, représentés en positon montée ;
- la figure 3c est une section suivant un plan horizontal de la figure 3b ;
- les figures 4a à 4c sont des vues similaires aux vues 3a à 3C;
- les figures 5a à 5c sont des vues similaires aux vues 3a à 3C;
- les figures 6a à 6c sont des vues similaires aux vues 3a à 3C;
- la figure 7a est une section suivant un plan longitudinal vertical médian de l'extrémité avant du bras et du connecteur selon l'invention ; et
- les figures 7b et 7c sont des vues similaires à celle de la figure 7a, représentant les moyens de limitation de l'amplitude de picotement du connecteur par rapport à l'extrémité du bras selon l'invention.

Pour la description de l'invention, on adoptera à titre non limitatif les orientations verticale, longitudinale et transversale selon le repère V, L, T indiqué aux figures.

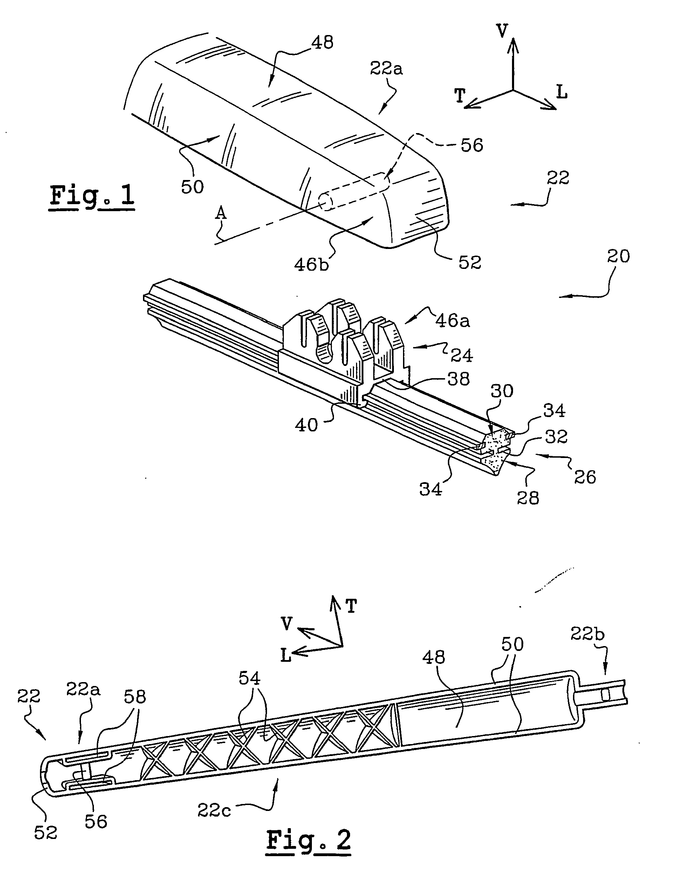

On adoptera aussi l'orientation d'arrière en avant comme étant la direction longitudinale et de droite à gauche en se reportant à la figure 1.

On adoptera le terme « inférieur » pour designer les parties situées généralement vers la vitre à essuyer.

On adoptera aussi le terme « supérieur » pour designer les parties situées généralement à l'opposé de la vitre à essuyer.

Dans la description qui va suivre, des éléments identiques, similaires ou analogues seront désignés par les mêmes chiffres de référence.

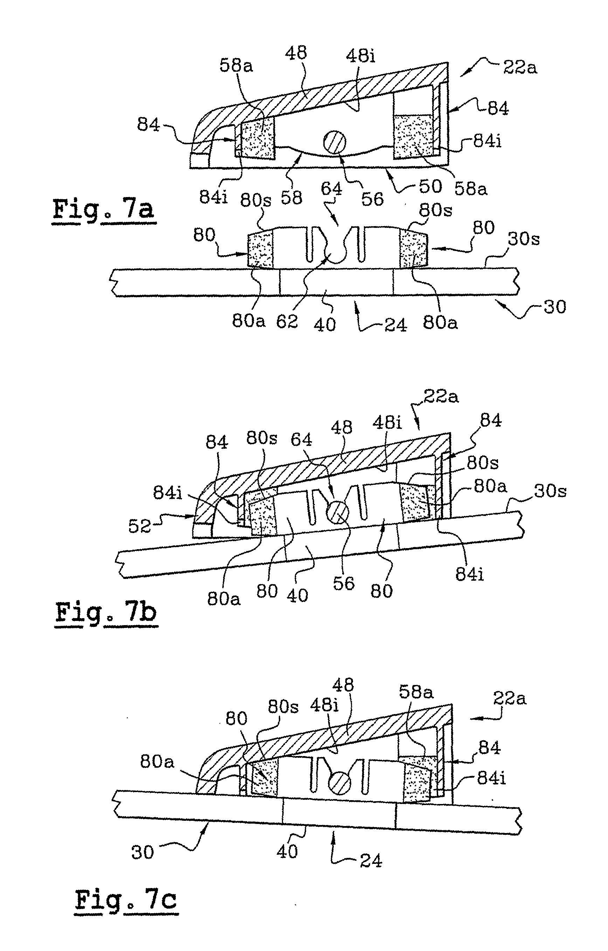

Notons que dans la description qui suit, seules les figures 7a à 7c illustrent l'invention telle que revendiquée.

On a représenté à la figure 1 un balai d'essuyage 20 destiné à être monté à rotation autour d'un axe A transversal à l'extrémité longitudinale avant libre 22a d'un bras d'essuie-glace 22 par l'intermédiaire d'un connecteur 24.

Le balai d'essuyage 20 comporte une raclette 26 s'étendant longitudinalement, qui est constituée dans sa partie inférieure d'une lame 28 destinée à frotter contre la vitre à essuyer, dans sa partie supérieure d'un talon de fixation 30, et d'une bande 32 formant charnière qui relie la lame 28 au talon 30.

Le balai d'essuyage 20 comporte aussi des vertèbres de rigidification 34 qui sont chacune reçues dans une rainure complémentaire réalisée dans un bord latéral du talon 30.

Les vertèbres 34 sont conçues de manière à assurer une rigidité au balai d'essuyage 20 permettant de répartir l'effort d'appui de la raclette 26 contre la vitre à essuyer sur toute sa longueur.

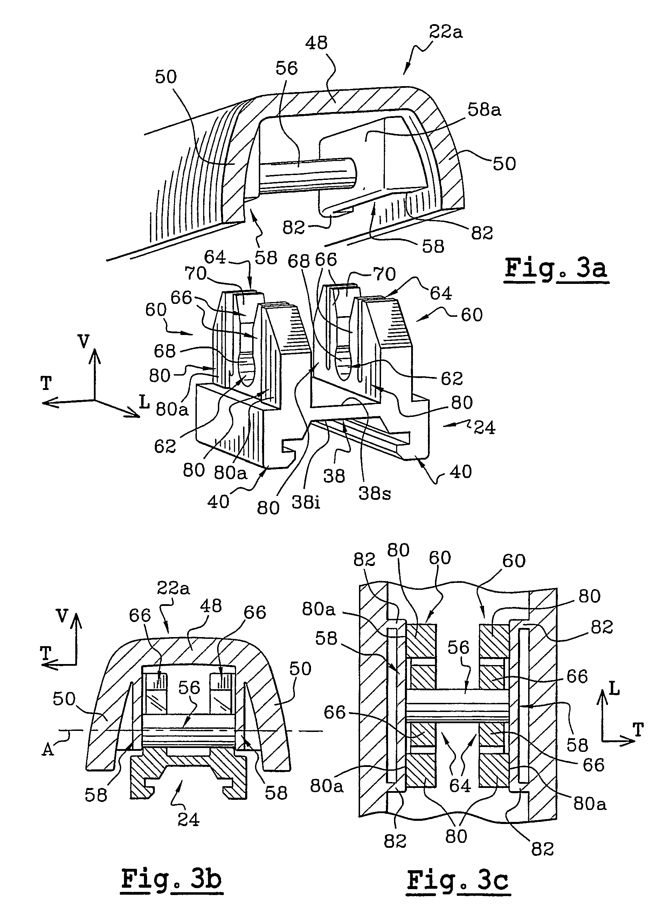

Comme on peut le voir plus en détail notamment à la figure 3a, le connecteur 24 comporte un corps 38 qui consiste globalement en une plaque plane qui s'étend horizontalement au-dessus du talon 30 de la raclette 26 et dont la face inférieure 38i porte des moyens de fixation du connecteur 24 au balai d'essuyage 20.

Ces moyens de fixation consistent en deux crochets 40 qui s'étendent verticalement vers le bas le long de chaque bord latéral du corps 38, et dont l'extrémité inférieure libre est recourbée horizontalement vers l'intérieur du connecteur 24 de manière que chaque crochet 40 est apte à recevoir le bord longitudinal externe d'une vertèbre 34 pour réaliser le positionnement vertical et transversal du connecteur 24 par rapport au balai 20.

Le positionnement longitudinal du connecteur 24 par rapport au balai 20 est réalisé par l'intermédiaire d'un bossage de positionnement (non représenté) qui s'étend transversalement depuis une face interne d'un crochet 40 et qui est apte à être reçu dans une encoche complémentaire de la vertèbre 34 associée.

Le corps 38 du connecteur 24 porte sur sa face supérieure 38s des moyens d'articulation 46a autour de l'axe transversal A d'articulation, qui sont aptes à coopérer avec des moyens d'articulation 46b complémentaires de l'extrémité longitudinale avant 22a du bras 22.

Comme on peut le voir à la figure 2, le bras 22 s'étend globalement longitudinalement, il est de section transversale verticale en U, et comporte un dos supérieur 48 horizontal et deux joues latérales 50 qui s'étendent verticalement vers le bas depuis les bords latéraux du dos supérieur 48.

L'extrémité longitudinale arrière 22b du bras 22 est conformée de manière à recevoir une tête d'entraînement (non représentée) en rotation autour d'un axe vertical.

Comme on peut le voir plus en détail à la figure 1, l'extrémité avant 22a du bras 22 est conformée de manière que lorsqu'elle est reliée au connecteur 24, ce dernier est entièrement recouvert par l'extrémité avant 22a du bras 22.

Pour cela, lorsque le connecteur 24 est en position montée sur l'extrémité avant 22a du bras 22, le dos 48 de l'extrémité avant 22a s'étend au-dessus du connecteur 24, les joues latérales 50 de l'extrémité avant 22a du bras 22 s'étendent de part et d'autre du connecteur 24, et la distance de celui-ci. De plus, le dos supérieur 48 est prolongé vers l'avant par une joue transversale globalement verticale 52 qui s'étend en avant du connecteur 24.

Le bras 22 comporte aussi un certain nombre de nervures de renfort 54 qui relient les joues latérales 50 entre-elles et au dos 48, et qui sont réparties dans la partie centrale 22c du bras 22 de manière à procurer au bras 22 une rigidités suffisantes

Enfin, le dos supérieur 48 de l'extrémité avant 22a du bras 22 porte à sa face inférieure 48i les moyens d'articulation 46b qui coopèrent avec les moyens d'articulation 46a du connecteur 24.

Comme on l'a représenté aux figures 3a à 6c, les moyens d'articulation 46a, 46b du connecteur 24 avec l'extrémité avant 22a du bras 22 comportent au moins un pivot 56 cylindrique, de section circulaire et d'axe transversal confondu avec l'axe transversal A d'articulation.

Le pivot 56 est porté à au moins une de ses extrémités transversales 56a par un premier élément de support 58 associé, de manière que le pivot 56 s'étende transversalement depuis une face latérale 58a du premier élément de support 58.

Les moyens d'articulation 46a, 46b du connecteur 24 avec l'extrémité avant 22a du bras 22 comportent aussi au moins un deuxième élément de support 60 dans lequel est réalisé un logement 62 complémentaire du pivot 56, permettant de réaliser le guidage en rotation du connecteur 24 par rapport à l'extrémité avant 22a du bras 22 autour de l'axe transversal A d'articulation.

Le premier élément de support 58 et le deuxième élément de support 60 sont agencés de manière que le premier élément de support 58 appartienne soit au connecteur 24, soit à l'extrémité avant 22a du bras 22, et de manière que le deuxième élément de support 60 appartienne soit à l'extrémité avant 22a du bras 22, soit au connecteur 24 respectivement.

Enfin, le premier élément de support 58 et/ou le deuxième élément de support 60 comportent des éléments qui sont aptes à se déformer élastiquement pour permettre l'introduction du pivot 56 dans le logement 62 associé, et pour provoquer le verrouillage radial automatique pivot 58 dans le logement 62.

Ces éléments déformables élastiquement permettent un emboîtement élastique du pivot 56 dans le logement 62 associé, et donc un assemblage aisé du connecteur 24 avec le bras 22 qui est aussi appelé "clipsage".

Le premier élément de support 58 et le deuxième élément de support 60 sont réalisés venus de matière par moulage en matière plastique avec le bras 22 ou avec le connecteur 24 respectivement.

Le moulage en matière plastique est un procédé permettant de réaliser un élément de formes complexes avec un coût et des contraintes de fabrication réduits.

Puisque, le connecteur 24 et le bras 22 consistent chacun en un seul élément, l'assemblage de l'essuie-glace est alors simplifié, le montage du connecteur 24 avec le bras 22 s'effectuant par emboîtement élastique.

Selon un mode de réalisation, le connecteur 24 et l'extrémité avant 22a du bras 22 sont chacun symétriques par rapport à un même plan longitudinal vertical médian, de manière qu'ils comportent chacun deux premiers éléments de support 58 ou deux deuxièmes éléments de support 60 respectivement.

Dans la description qui va suivre, on fera référence à un seul premier élément de support 58 et à un seul deuxième élément de support 60, cependant, il sera compris que cette description s'applique également à l'autre premier élément de support 58 et à l'autre deuxième élément de support 60.

Selon un mode de réalisation, représenté aux figures 3a à 3c, le deuxième élément de support 60 est un élément du connecteur 24, et donc le premier élément de support 58 est un élément de l'extrémité avant 22a du bras 22.

Le deuxième élément de support 60 comporte une pince élastique 64 dont les branches 66 s'étendent verticalement vers le haut depuis le bord latéral du corps 38 et sont articulées autour d'un axe transversal globalement situé en dessous de l'axe transversal A d'articulation du balai 20 par rapport au bras 22.

Les faces internes en vis-à-vis des deux branches 66 comportent chacune, à proximité de la base de la branche 66 associée, une portion concave 68 qui délimite en partie le logement 62, et au niveau de l'extrémité supérieure libre de la branche 66 associée, une portion en forme de rampe 70 parallèle à la direction transversale, sur laquelle le pivot 56 s'appuie lors de son introduction dans le logement 62 pour provoquer l'écartement de la branche 66 associée.

Ainsi, lors du montage du connecteur 24 avec le bras d'essuie-glace 22, le pivot 56 est introduit dans le logement 62 associé par un mouvement vertical vers le bas, et étant donné que l'extrémité avant 22a du bras 22 a globalement la forme d'une coque ouverte à sa partie inférieure, ce type de mouvement paraît naturel pour la personne qui assemble le connecteur 24 avec le bras 22.

Selon ce mode de réalisation, l'extrémité avant 22a du bras 22 comporte un seul pivot 56 qui s'étend transversalement entre les joues latérales 50 du bras 22 de manière que chaque extrémité 56a du pivot 56 soit associée à l'un des deux deuxièmes éléments de support 60 et soit reçue entre les branches 66 d'une pince élastique 64.

Conformément à ce mode de réalisation, le pivot 56 est relié au bras 22 par l'intermédiaire de deux ailes longitudinales qui s'étendent verticalement vers le bas depuis la face inférieure 48i du dos 48, qui forment chacune un premier élément de support 58, et dont les faces longitudinales verticales en vis-à-vis 58a portent le pivot 56.

Les deux ailes longitudinales sont agencées transversalement entre les joues latérales 50 du bras 22, et de manière à s'étendre de part et d'autre du connecteur 24 lorsqu'il est en position montée sur le bras 22.

Par ailleurs, pour augmenter la rigidité des deux ailes, celles-ci sont reliées à chacune de leurs extrémités longitudinales, aux joues latérales 50 du bras 22 par l'intermédiaire de nervures 82.

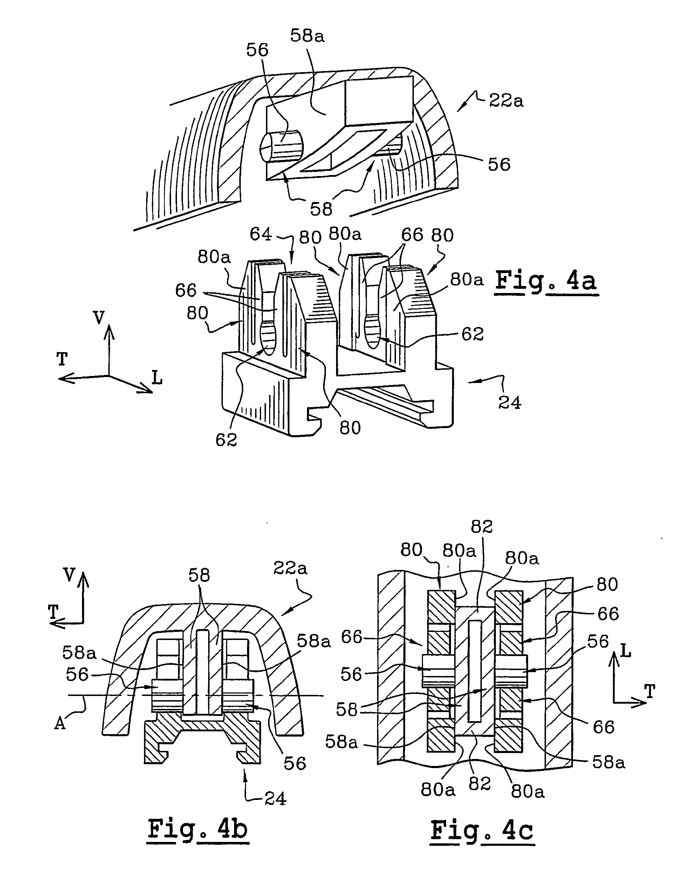

Selon un autre mode de réalisation représenté aux figures 4a à 4b, le premier élément de support 58 est agencé transversalement à proximité du plan longitudinal vertical médian de l'extrémité avant 22a du bras 22, de manière que les deux ailes de l'extrémité avant 22a du bras 22 soient agencées transversalement entre les deux deuxièmes éléments de support 60, et le pivot 56 associé s'étend transversalement vers l'extérieur du bras 22 depuis la face latérale externe 58a du premier élément de support 58.

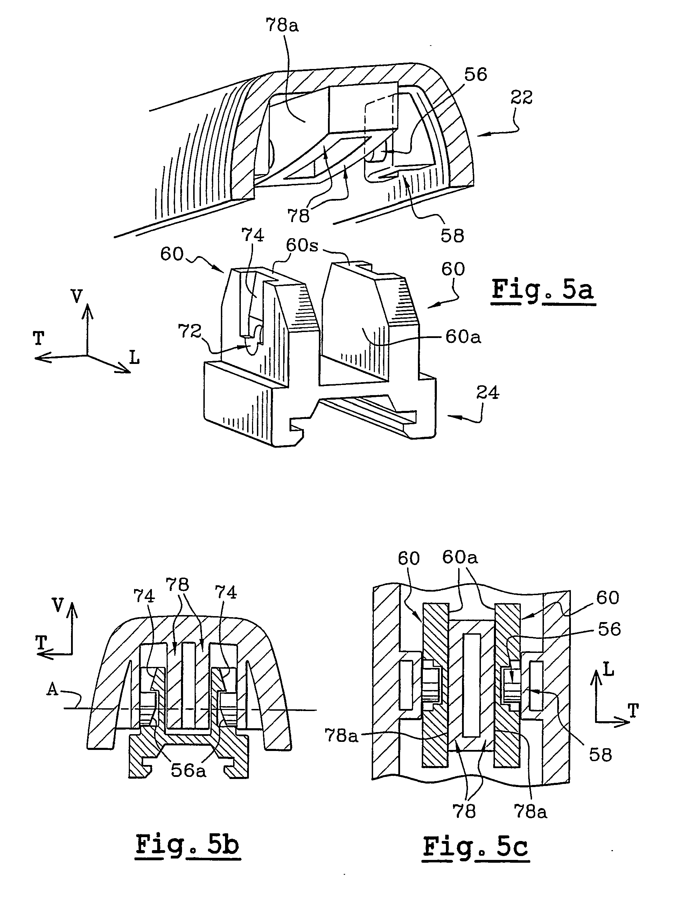

Selon une variante de réalisation, représentée aux figures 5a à 5c, le deuxième élément de support 60 consiste en une joue longitudinale qui s'étend verticalement vers le haut depuis la face supérieure 38s du corps 38, et qui comporte un orifice transversal 72 qui délimite le logement 62.

L'introduction du pivot 56 dans le logement 62 s'effectue ici aussi par un mouvement vertical vers le bas du bras 22 par rapport au connecteur 24. De ce fait, la paroi cylindrique transversale de l'orifice transversal 72 empêche l'introduction du pivot 56 dans le logement 62.

C'est pourquoi le deuxième élément de support 60 est déformable élastiquement, et il comporte une portion en forme de rampe 74, inclinée par rapport au plan longitudinal vertical du deuxième élément de support 60, et qui s'étend verticalement depuis le bord longitudinal supérieur 60s du deuxième élément de support 60, jusqu'à la paroi cylindrique de l'orifice transversal 72.

Lors de son introduction dans le logement 62, le pivot 56 s'appuie sur la portion en forme de rampe 74, provoquant la déformation du deuxième élément de support 60, principalement de la portion en forme de rampe 74 qui s'escamote transversalement pour le passage du pivot 56.

De plus, l'extrémité 56a du pivot 56 qui s'appuie sur la portion en forme de rampe 74 est chanfreinée de manière complémentaire à la portion en forme de rampe 74. Cette portion chanfreinée coopère avec la portion en forme de rampe 74 pour provoquer la déformation du deuxième élément de support 60.

Conformément à cette variante de réalisation, l'orifice transversal 72 est un trou borgne qui est débouchant à l'une de ses extrémités transversales, ici l'extrémité transversale externe, par rapport au connecteur 24.

Le pivot 56 est porté par le premier élément de support 58 qui est agencé transversalement en vis-à-vis de l'extrémité ouverte de l'orifice transversal 72, c'est-à-dire ici, agencé transversalement à l'extérieur du connecteur 24, et le pivot 56 s'étend transversalement depuis la face 58a du premier élément de support 58 qui est en vis-à-vis de l'extrémité ouverte de l'orifice transversal 72, c'est-à-dire ici vers l'intérieur du bras 22.

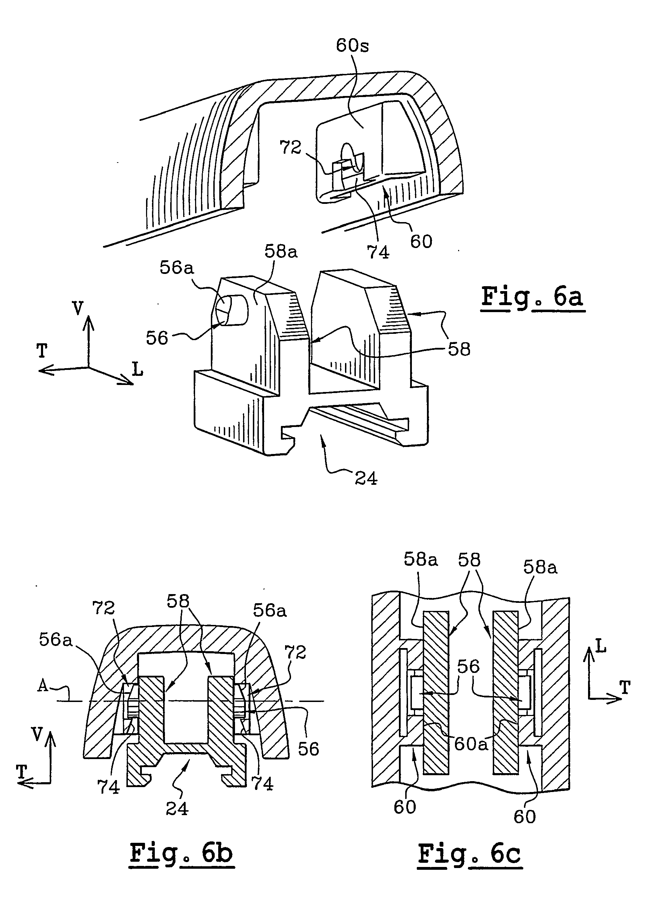

On a représenté aux figures 6a à 6c un autre mode de réalisation dans lequel le premier élément de support 58, et donc le pivot 56, est un élément du connecteur 24, et le deuxième élément de support 60 est un élément de l'extrémité avant 22a du bras 22.

La structure du premier élément de support 58 et du deuxième élément de support 60, ainsi que du pivot 56, est similaire à celle décrite pour le mode de réalisation précédent, c'est-à-dire que le deuxième élément de support 60 consiste en une joue longitudinale verticale comporte un orifice transversal 72 délimitant le logement 62, et le premier élément de support 58 consiste en une aile verticale qui porte sur une de ses faces latérales 58a le pivot 56.

Bien entendu, et sera compris que le deuxième élément de support 60 peut aussi comporter une pince élastique 64 qui s'étend verticalement vers le bas depuis le dos 48 de l'extrémité avant 22a du bras 22.

La forme du logement 62 qui est complémentaire à celle du pivot 56, c'est-à-dire cylindrique de section circulaire, permet un guidage en rotation autour de l'axe transversal A d'articulation du connecteur 24 par rapport à l'extrémité avant 22a du bras 22. Cependant, cette forme ne permet pas d'assurer un verrouillage en mouvement transversal du connecteur 24 par rapport au bras 22.

Ainsi, un jeu transversal peut exister entre le connecteur 24 et le bras 22, provoquant des bruits désagréables et endommageant les divers éléments de l'essuie-glace lors de son fonctionnement.

C'est pourquoi, comme on l'a représenté aux figures 4a à 4c et 6a à 6c, le premier élément de support 58 et le deuxième élément de support 60 comportent chacun une face de guidage, ou "godron", ces faces étant les faces latérales longitudinales verticales en vis-à-vis des premiers et deuxièmes éléments de support 58, 70, respectivement, et elles coopèrent pour le guidage en rotation du connecteur 24 par rapport à l'extrémité avant 22a du bras 22.

Selon une variante de cet aspect, représentée aux figures 5a à 5c, la face longitudinale verticale du deuxième élément de support 60 coopère avec une face longitudinale verticale 78a en vis-à-vis d'une nervure de guidage 78.

La nervure de guidage 78 est réalisée venue de matière avec le premier élément de support 58, c'est-à-dire avec le bras 22 lorsque le premier élément de support 58 est réalisé venu de matière avec le bras 22, ou bien elle est réalisée venue de matière avec le connecteur 24 lorsque le premier élément de support 58 est réalisé venu de matière avec le connecteur 24.

De plus, la nervure de guidage 78 est positionnée transversalement sur le bras 22 ou le connecteur 24 respectivement, de manière que la nervure de guidage 78 et le premier élément de support 58 soient répartis de part et d'autre du deuxième élément de support 60.

Ainsi, comme on peut le voir aux figures 5a à 5c, lorsque le premier élément de support 58 est situé en vis-à-vis de la face externe du deuxième élément de support 60, par rapport au connecteur 24, la nervure de guidage 78 est située en vis-à-vis de la face interne du deuxième élément de support 60, et inversement, lorsque le premier élément de support 58 est situé en vis-à-vis de la face interne du deuxième élément de support, la nervure de guidage 78 est située en vis-à-vis de la face externe deuxième élément de support.

Par ailleurs, puisque l'extrémité avant 22a du bras 22 et le connecteur 24 sont symétriques par rapport au plan, lorsque la nervure de guidage 78 est située en vis-à-vis de la face interne du deuxième élément de support 60, l'extrémité avant 22a du bras 22 ou le connecteur 24 comporte une seule nervure de guidage 78, ou bien les deux nervures 78 sont reliée de manière à former un seul élément, dont chacune des faces latérales de guidage 78a s'appuie contre une face latérale longitudinale verticale interne du deuxième élément de support 60.

Dans le mode de réalisation représenté aux figures 3a à 3c, le deuxième élément de support 60 comporte une pince élastique 64 qui reçoit le pivot 56. Lorsque le la nervure de guidage 78 ou le premier élément de support 58 s'appuie sur une face latérale de la pince élastique 64 les frottements générés peuvent alors s'opposer à l'ouverture de la pince 64 et donc rendre le montage du connecteur 24 sur l'extrémité avant 22a du bras 22 plus difficile pour l'utilisateur.

Pour supprimer le contact entre la pince élastique 64 et la nervure de guidage 78, ou le premier élément de support 58, le deuxième élément de support 60 comporte deux joues longitudinales verticales 80 réparties de part et d'autre de la pince élastique 64 dont la face latérale 80a en vis-à-vis du premier élément de support 58 ou de la nervure de guidage, forme la face d'appui, et fait saillie transversalement par rapport à la pince élastique 64.

De plus, pour que le guidage en rotation du connecteur 24 par rapport à l'extrémité avant 22a du bras 22 soit le plus efficace possible, c'est-à-dire pour éviter que le connecteur 24 ne pivote par rapport à l'extrémité avant 22a du bras 22 autour d'un axe sensiblement vertical, les faces latérales 80a des joues 80, qui forment des surfaces de guidage, sont éloignées de manière importante par rapport au logement 62 de manière qu'elles s'étendent de part et d'autre du corps 38 du connecteur 24, préférentiellement à distance de celui-ci.

Puisque l'extrémité avant 22a du bras 22 est conçu pour recouvrir entièrement le connecteur 24, lorsque l'utilisateur veut monter le connecteur 24 avec l'extrémité avant 22a du bras 22, et du fait de la position du bras 22 par rapport au véhicule, il lui est relativement difficile de positionner correctement le connecteur 24 par rapport à l'extrémité avant 22a du bras 22, le positionnement s'effectue alors "à l'aveugle", avec plus ou moins de réussite de la part de l'utilisateur.

Les joues latérales 50 de l'extrémité avant 22a du bras 22 permettent de positionner transversalement le connecteur 24 par rapport à l'extrémité avant 22a du bras 22. Cependant, elles ne permettent pas de le positionner longitudinalement.

C'est pourquoi, selon un aspect de l'invention, représenté aux figures 7a à 7c, l'extrémité avant 22a du bras 22 comporte deux nervures transversales verticales 84 qui s'étendent verticalement vers le bas depuis la face inférieure 48i du dos supérieur 48, et qui relient les joues latérales 50.

Les nervures transversales 84 sont agencées longitudinalement par rapport au dos supérieur 48 de manière que lorsque le connecteur 24 est en position montée avec l'extrémité avant 22a du bras 22, elles s'étendent de part et d'autre du connecteur 24.

De plus, le connecteur 24 comporte des joues longitudinales verticales 80 qui s'étendent verticalement vers le haut depuis le corps 38 du connecteur 24 dont le bord supérieur est conformé en forme de rampe.

Ainsi, lors de l'introduction du pivot 56 dans le logement 62, si le connecteur 24 n'est pas correctement positionné longitudinalement par rapport à l'extrémité avant 22a du bras 22, le bord inférieur 84i d'une nervure 84 vient en butée contre le bord supérieur 80s d'une joue 80, signifiant à l'utilisateur le mauvais positionnement longitudinal du connecteur 24 et qu'il est nécessaire de déplacer longitudinalement celui-ci.

De plus, puisque le bord supérieur 80s de chaque joue 80 est conformée en forme de rampe, lorsque le bord inférieur 84i d'une nervure 84 s'appuie contre le bord supérieur 80s de la joue 80 associée, un effort vertical d'insertion du connecteur 24 de la part de l'utilisateur provoque un mouvement longitudinal de celui-ci vers la position correcte par rapport à l'extrémité avant 22a du bras 22 dans laquelle le pivot 56 peut être introduit dans le logement 62.

Selon une variante de réalisation (non représentée), le positionnement longitudinal du connecteur 24 par rapport à l'extrémité avant 22a du bras 22 est réalisé d'une part par une nervure 84 qui est située en arrière du pivot 56, et d'autre part par la joue transversale verticale 52 qui prolonge le dos supérieur 48 vers l'avant.

Selon cette variante le bras 22 ne comporte qu'une seule nervure 84, ce qui simplifie la fabrication et réduit le poids du bras 22.

Lorsque l'utilisateur désire manipuler le balai 20, notamment pour contrôler son état d'usure, il l'éloigne de la vitre à essuyer en faisant pivoter le bras 22 par rapport à la tête d'entraînement. Le balai 20 est alors apte à pivoter librement par rapport au bras 22 autour de l'axe A, et l'amplitude de ce pivotement est généralement importante, ce qui est relativement gênant pour l'utilisateur.

C'est pourquoi le connecteur 24 et le bras 22 comportent des moyens permettant de limiter l'amplitude de pivotement du connecteur 24 autour de l'axe A.

Comme on peut voir à la figure 7b, l'amplitude de pivotement dans un premier sens, ici le sens trigonométrique, est limitée par le fait que la face supérieure 30s du talon 30 de la raclette 26 vient en butée contre le bord inférieur 84i d'une nervure transversale 84, ici la nervure transversale 84 située en arrière du pivot 56.

Comme on peut le voir à la figure 7c, l'amplitude de pivotement dans le deuxième sens, ici le sens trigonométrique inverse, est limitée par le fait que le bord supérieur 80s des joues 80 du connecteur 24, qui sont situées en avant du logement 62, vient en butée contre la face inférieure 48i du dos supérieur 48 du bras 22.

Selon un mode de réalisation de l'invention, le bord inférieur 84i de la nervure transversale 84 située en arrière du pivot 56, et les bords supérieurs 80s des joues 80 situés en avant du logement 62 s'étendent verticalement depuis la face inférieure 48i du dos supérieur 48, ou depuis la face supérieure 38s du corps 38 du connecteur 24, respectivement, de manière que l'amplitude de pivotement du balai 20 par rapport au bras 22 dans un sens ou dans l'autre soit d'un angle prédéterminé. Cet angle prédéterminé permet de conserver un appui du balai 20 sur la vitre en chaque endroit de celle-ci, et il est de préférence égal à 10°.

Selon un mode de réalisation de l'invention, le connecteur 24 présente aussi une symétrie par rapport à un plan vertical transversal médian de sorte que les joues 80, et plus particulièrement leurs bords supérieurs 80s, soient symétriques par rapport à ce plan médian.

Cette symétrie permet d'éviter à l'utilisateur une vérification de l'orientation du connecteur 24 par rapport au bras 22 lors du montage, d'où un gain de temps et une simplicité du montage pour l'utilisateur, mais aussi lors du premier montage en usine.

Ici la limitation de l'amplitude de pivotement du balai 20 par rapport au bras 22 est réalisée par des moyens différents selon le sens du pivotement. Cependant, il sera compris que les moyens permettant de limiter l'amplitude de pivotement peuvent âtre identiques pour les deux sens de pivotement, ou bien inversés pour les deux sens de pivotement, sans que l'on sorte du domaine de l'invention.

De plus, la limitation de l'amplitude de pivotement du balai 20 par rapport au bras 22 dans le sens trigonométrique inverse peut être réalisée soit par l'intermédiaire d'une nervure transversale 84 ou bien par la joue transversale verticale 52 qui prolonge le dos supérieur 48 vers l'avant.

Un connecteur et un bras d'entraînement qui sont chacun réalisés d'une seule pièce par moulage d'une matière plastique permettent d'une part de réduire le coût de fabrication de chacun de ces éléments et d'autre part de réduire le temps d'assemblage du mécanisme d'essuie-glace.

## Revendications

1. Essuie-glace de véhicule automobile qui comporte un balai d'essuyage (20) monté articulé à l'extrémité longitudinale avant (22a) d'un bras d'essuie-glace (22) autour d'un axe transversal horizontal (A) par l'intermédiaire d'un connecteur (24),
dans lequel le connecteur (24) comporte un corps (38) globalement horizontal dont la face inférieure (38i) porte des crochets (40) de fixation à un élément de structure (34) du balai (20) qui porte la raclette (26) du balai (20),
dans lequel la face supérieure (38s) du corps (38) du connecteur (24) porte des moyens d'articulation (46a) avec l'extrémité (22a) du bras (22) autour de l'axe transversal d'articulation (A),
dans lequel l'extrémité (22a) du bras (22) comporte un dos (48) qui s'étend sensiblement horizontalement au-dessus du connecteur (24) et qui porte des moyens d'articulation (46b) du connecteur (24) autour de l'axe transversal d'articulation (A),
dans lequel les moyens d'articulation du connecteur (46a, 46b) avec l'extrémité (22a) du bras (22) comportent au moins un pivot (56) d'axe transversal coaxial à l'axe transversal d'articulation (A), qui s'étend transversalement depuis une face latérale (58a) d'un premier élément de support (58) associé appartenant à l'extrémité (22a) du bras (22) ou au connecteur (24), et qui est apte à être reçu dans un logement (62) complémentaire réalisé dans un deuxième élément de support (60) associé appartenant au connecteur (24) ou à l'extrémité (22a) du bras (22), respectivement,
dans lequel le premier élément de support (58) et/ou le deuxième élément de support (60) comportent des éléments déformables élastiquement pour permettre l'introduction du pivot (56) dans le logement (62) associé et provoquer le verrouillage radial automatique du pivot (56) dans le logement (62),
dans lequel le premier élément de support (58) et le deuxième élément de support (60) sont réalisés venus de matière par moulage en matière plastique avec le bras (22) ou le connecteur (24) respectivement, et
dans lequel l'extrémité (22a) du bras (22) comporte des moyens de positionnement (52, 84) longitudinal du connecteur distincts des moyens d'articulation (56),
**caractérisé en ce que** les moyens de positionnement comporte deux nervures (84) transversales verticales qui relient deux joues latérales (50) de l'extrémité (22a) du bras (22) et qui sont réparties longitudinalement par rapport au dos (48) du bras (22) de manière que le connecteur (24) s'étende longitudinalement entre les nervures transversales (84) lorsqu'il est en position montée entre les joues (50) de l'extrémité (22a) du bras (22).

2. Essuie-glace selon la revendication précédente, **caractérisé en ce que** les moyens de positionnement (52, 84) s'étendent sensiblement transversalement par rapport à la direction longitudinal du bras.

3. Essuie-glace selon la revendication précédente, **caractérisé en ce que** le connecteur (24) comporte une portion en forme de rampe (80s) qui est apte à coopérer avec le bord inférieur (84i) d'une nervure (84) pour positionner longitudinalement le connecteur (24) avant l'introduction du pivot (56) dans le logement (62).

4. Essuie-glace selon l'une quelconque des revendications précédentes, **caractérisé en ce que** le connecteur (24) et le bras (22) comportent des moyens de limitation de l'amplitude du pivotement du balai (20), et du connecteur (24), par rapport au bras (22), autour de l'axe transversal (A) d'articulation.

5. Essuie-glace selon la revendication 4, **caractérisé en ce que** le connecteur (24) comporte au moins une joue (80) dont une surface supérieure (80s) vient en butée contre la face inférieure (48i) du dos (48) de l'extrémité (22a) du bras (22) pour une position angulaire extrême du balai (20) par rapport au bras (22).

6. Essuie-glace selon la revendication 4 ou 5, **caractérisé en ce qu'**au moins une nervure transversale (84) du bras (22) s'étend verticalement vers le bas de manière que la face supérieure (30s) de la raclette (26) vienne en butée contre le bord inférieur (84i) de la nervure (84), pour une position angulaire extrême du balai (20) par rapport au bras (22).

7. Essuie-glace selon l'une quelconque des revendications précédentes, **caractérisé en ce que** le deuxième élément de support (60) comporte une pince élastique (64) dont les faces internes en vis-à-vis des branches (66) de la pince (64) comportent chacune une portion concave (68) qui délimite en partie le logement (62), et dont les branches (66) sont globalement articulées autour d'un axe transversal de manière à s'écarter pour permettre l'introduction du pivot (56) dans le logement (62).

8. Essuie-glace selon la revendication précédente, **caractérisé en ce que** les branches (66) de la pince élastique (64) s'étendent globalement verticalement de manière que le pivot (56) soit apte à âtre introduit verticalement dans le logement (62) associé.

9. Essuie-glace selon l'une quelconque des revendications 1 à 6, **caractérisé en ce que** le deuxième élément de support (60) consiste en une joue longitudinale verticale qui comporte un orifice (72) transversal de section circulaire délimitant le logement (62).

10. Essuie-glace selon la revendication précédente, **caractérisé en ce que** la joue (60) comporte une portion en forme de rampe (74) qui s'étend depuis le bord longitudinal libre de la joue jusqu'à l'orifice transversal (72), sur laquelle s'appuie le pivot (56) lors de son introduction dans le logement (62), pour provoquer la déformation des éléments déformables élastiquement.

11. Essuie-glace selon la revendication précédente, **caractérisé en ce que** la joue (60) est déformable élastiquement.

12. Essuie-glace selon l'une des revendications 10 ou 11, **caractérisé en ce que** l'extrémité libre (56a) du pivot (56) est chanfreinée et est apte à coopérer avec la portion en forme de rampe (74) de la joue lors de l'introduction du pivot (56) dans le logement (62).

13. Essuie-glace selon l'une des revendications précédentes, **caractérisé en ce que** le deuxième élément de support (60) comporte une face latérale longitudinale verticale (60a) avec laquelle coopère une face longitudinale verticale en vis-à-vis (58a) appartenant au premier élément de support (58) pour le guidage en rotation du connecteur (24) par rapport à l'extrémité avant (22a) du bras (22).

14. Essuie-glace selon l'une quelconque des revendications 1 à 12, **caractérisé en ce que** le deuxième élément de support (60) comporte une face latérale longitudinale verticale (60a) avec laquelle coopère une face de guidage longitudinale verticale (78a) en vis-à-vis appartenant à une nervure (78) pour le guidage en rotation du connecteur (24) par rapport à l'extrémité avant (22a) du bras (22).

15. Essuie-glace selon l'une des revendications 13 ou 14, en combinaison avec la revendication 7, **caractérisé en ce que** le deuxième élément de support (60) comporte au moins une joue longitudinale verticale (80), dont la face latérale (80a) en vis-à-vis du premier élément de support (58) associé fait saillie transversalement par rapport à la pince (64) pour former une surface de guidage en rotation.

16. Essuie-glace selon la revendication précédente, **caractérisé en ce que** le connecteur (24) comporte deux joues longitudinales verticales (80) réparties longitudinalement de part et d'autre de la pince (64), et **en ce que** les faces latérales (80a) des joues (80), formant les surfaces de guidage s'étendent longitudinalement de part et d'autre du corps (38) du connecteur (24).

17. Essuie-glace selon la revendication 15 ou 16, **caractérisé en ce que** le premier élément de support (58) et la nervure (78) sont répartis transversalement de part et d'autre du deuxième élément de support (60).

18. Essuie-glace selon l'une quelconque des revendications précédentes, **caractérisé en ce que** le premier élément de support (58) est un élément du connecteur (24), et **en ce que** le deuxième élément de support (60) est une partie de l'extrémité (22a) du bras (22).

19. Essuie-glace selon la revendication précédente, en combinaison avec la revendication 14, **caractérisé en ce que** la nervure (78) est une partie du connecteur (24).

20. Essuie-glace selon l'une quelconque des revendications 1 à 17, **caractérisé en ce que** le premier élément de support (58) est un élément de l'extrémité (22a) du bras (22), et **en ce que** le deuxième élément de support (60) est une partie du connecteur (24).

21. Essuie-glace selon la revendication précédente, en combinaison avec la revendication 14, **caractérisé en ce que** la nervure (78) est une partie de l'extrémité (22a) du bras (22).

22. Essuie-glace selon l'une quelconque des revendications précédentes, **caractérisé en ce que** le connecteur (24) et l'extrémité (22a) du bras (22) sont chacun symétriques par rapport à un même plan longitudinal vertical médian, de manière que le connecteur (24) comporte deux premiers éléments de support (58) ou deux deuxièmes éléments de support (60), et l'extrémité (22a) du bras (22) comporte deux deuxièmes éléments de support (60) ou deux premiers éléments de support (58) respectivement.

23. Essuie-glace selon la revendication précédente, en combinaison avec la revendication 19 ou 20, **caractérisé en ce que** la nervure (78) est agencée transversalement entre deux deuxièmes éléments de support (60).

## Claims

1. A windshield wiper for a motor vehicle which includes a wiper blade (20) joint-mounted at the front longitudinal end (22a) of a wiper arm (22) about a horizontal transversal axis (A) by means of a connector (24),
wherein the connector (24) includes a substantially horizontal body (38) the lower face (38i) of which carries clips (40) for the fastening thereof to an element of the structure (34) of the wiper blade (20) which carries the rubber part (26) of the wiper blade (20),
wherein the upper face (38s) of the body (38) of the connector (24) carries jointing means (46a) with the end (22a) of the arm (22) about the jointing transversal axis (A),
wherein the end (22a) of the arm (22) includes a back (48) which extends substantially horizontally above the connector (24) and which carries jointing means (46b) for the connector (24) about the jointing transversal axis (A),
wherein the means for jointing the connector (46a, 46b) with the end (22a) of the arm (22) include at least one transversal axis pivot (56) coaxial to the jointing transversal axis (A) which extends transversally from a side face (58a) of a first support element (58) associated thereto which belongs to the end (22a) of the arm (22) or to the connector (24) and which is able to be received in a matching recess (62) provided in a second associated supporting element (60) belonging to the connector (24) or to the end (22a) of the arm (22) respectively,
wherein the first supporting element (58) and/or the second supporting element (60) include elastically deformable elements to allow the introduction of the pivot (56) into the associated recess (62) and cause the automatic radial locking of the pivot (56) in the recess (62),
wherein the first supporting element (58) and the second supporting element (60) are made in one piece by molding plastic material with the arm (22) or the connector (24) respectively, and
wherein the end (22a) of the arm (22) includes means for the longitudinal positioning (52, 84) of the connector which are separate from the jointing means (56),
**characterised in that** the positioning means include two vertical transversal ribs (84) which connect two side flanges (50) of the end (22a) of the arm (22) and which are longitudinally distributed with respect to the back (48) of the arm (22), so that the connector (24) extends longitudinally between the transversal ribs (84) when it is in mounted position between the flanges (50) of the end (22a) of the arm (22).

2. A windshield wiper according to the preceding claim, **characterised in that** the positioning means (52, 84) extend substantially transversally with respect to the longitudinal direction of the arm.

3. A windshield wiper according to the preceding claim, **characterised in that** the connector (24) includes a ramp-shaped portion (80s) which is able to cooperate with the lower edge (84i) of a rib (84) for longitudinally positioning the connector (24) prior to the introduction of the pivot (56) into the recess (62).

4. A windshield wiper according to any one of the preceding claims, **characterised in that** the connector (24) and the arm (22) include means for limiting the amplitude of the pivoting of the wiper arm (20) and the connector (24) with respect to the arm (22) about the jointing transversal axis (A).

5. A windshield wiper according to claim 4, **characterised in that** the connector (24) includes at least one flange (80), an upper surface (80s) of which abuts against the lower face (48i) of the back (48) of the end (22a) of the arm (22) for an extreme angular position of the wiper arm (20) with respect to the arm (22).

6. A windshield wiper according to claim 4 or 5, **characterised in that** at least one transversal rib (84) of the arm (22) extends vertically downward, so that the upper face (30s) of the blade (26) abuts against the lower edge (84i) of the rib (84), for an extreme angular position of the wiper arm (20) with respect to the arm (22).

7. A windshield wiper according to any one of the preceding claims, **characterised in that** the second supporting element (60) includes an elastic clamp (64) the internal faces of which are opposite the branches (66) of the clamp (64) each include a concave portion (68) which partly defines the recess (62), and the branches (66) of which are globally jointed about a transversal axis so as to open in order to allow the introduction of the pivot (56) into the recess (62).

8. A windshield wiper according to the preceding claim, **characterised in that** the branches (66) of the elastic clamp (64) extend substantially vertically so that the pivot (56) is able to be vertically introduced into the associated recess (62).

9. A windshield wiper according to any one of the claims 1 to 6, **characterised in that t**he second supporting element (60) consists of a vertical longitudinal flange which includes a transversal hole (72) having a circular section defining the recess (62).

10. A windshield wiper according to the preceding claim, **characterised in that** the flange (60) includes a ramp-shaped portion (74) which extends from the free longitudinal edge of the flange up to the transversal hole (72) on which the pivot (56) rests during the introduction thereof into the recess (62) in order to cause the deformation of the elastically deformable elements.

11. A windshield wiper according to the preceding claim, **characterised in that** the flange (60) is elastically deformable.

12. A windshield wiper according to one of claims 10 or 11, **characterised in that** the free end (56a) of the pivot (56) is chamfered and is able to cooperate with the ramp-shaped portion (74) of the flange upon the introduction of the pivot (56) into the recess (62).

13. A windshield wiper according to one of the preceding claim, **characterised in that** the second supporting element (60) includes a vertical longitudinal lateral face (60a) with which an opposite vertical longitudinal face (58a) belonging to the first supporting element (58) cooperates for guiding the connector in rotation with respect to the front end (22a) of the arm (22).

14. A windshield wiper according to any one of claims 1 to 12, **characterised in that** the second supporting element (60) includes a vertical longitudinal lateral phase (60a) with which an opposite vertical longitudinal guiding face (78a) belonging to one rib (78) cooperates for guiding the connector (24) in rotation with respect to the front end (22a) of the arm (22).

15. A windshield wiper according to one of claims 13 or 14, in combination with claim 7, **characterised in that** the second supporting element (60) includes at least one vertical longitudinal flange (80) the side face (80a) of which, opposite the first associated supporting element (58), protrudes transversally with respect to the clamp (64) to form a rotation guiding surface.

16. A windshield wiper according to the preceding claim, **characterised in that** the connector (24) includes two vertical longitudinal flanges (80) distributed longitudinally on either side of the clamp (64) and **in that** the side faces (80a) of the flanges (80) forming the guiding surfaces extend longitudinally on either side of the body (38) of the connector (24).

17. A windshield wiper according to claim 15 or 16, **characterised in that** the first supporting element (58) and the rib (78) are transversally distributed on either side of the second supporting element (60).

18. A windshield wiper according to any one of the preceding claims, **characterised in that** the first supporting element (58) is a connector (24) element and **in that** the second supporting element (60) is a part of the end (22a) of the arm (22).

19. A windshield wiper according to the preceding claim in combination with claim 14, **characterised in that** the rib (78) is a part of the connector (24).

20. A windshield wiper according to any one of claims 1 to 17, **characterised in that** the first supporting element (58) is an element of the end (22a) of the arm (22).
and **in that** the second supporting element (60) is a part of the connector (24).

21. A windshield wiper according to the preceding claim in combination with claim 14, **characterised in that** the rib (78) is a part of the end (22a) of the arm (22).

22. A windshield wiper according to any one of the preceding claims, **characterised in that** the connector (24) and the end (22a) of the arm (22) are, each, symmetrical with respect to the same middle vertical longitudinal plane, so that the connector (24) includes two first supporting elements (58) or two second supporting elements (60) and the end (22a) of the arm (22) includes two second supporting elements (60) or two first supporting elements (58), respectively.

23. A windshield wiper according to the preceding claim, in combination with claims 19 or 20, **characterised in that t**he rib (78) is arranged transversally between two second supporting elements (60).

## Patentansprüche

1. Scheibenwischer eines Kraftfahrzeugs, der einen Wischer (20) umfasst, der mittels eines Verbinders (24) am vorderen Längsende (22a) eines Scheibenwischerarms (22) um eine horizontale transversale Achse (A) artikuliert angebracht ist,
in dem der Verbinder (24) einen global horizontalen Körper (38) umfasst, dessen untere Seite (38i) Befestigungshaken (40) an einem Strukturelement (34) des Wischers (20) trägt, das die Lippe (26) des Wischers (20) trägt,
in dem die obere Seite (38s) des Körpers (38) des Verbinders (24) Artikulationsmittel (46a) mit dem Ende (22a) des Arms (22) um die transversale Artikulationsachse (A) trägt,
in dem das Ende (22a) des Arms (22) einen Rücken (48) umfasst, der sich deutlich horizontal oberhalb des Verbinders (24) erstreckt und der Artikulationsmittel (46b) des Verbinders (24) um die transversale Artikulationsachse (A) trägt.
in dem die Artikulationsmittel (46a, 46b) der Verbinders mit dem Ende (22a) des Arms (22) wenigstens einen transversalen koaxialen Achsenzapfen (56) an der transversalen Artikulationsachse (A) tragen, die sich transversal von einer lateralen Seite (58a) eines ersten zugeordneten Trägerelements (58) erstreckt, das zu dem Ende (22a) des Arms (22) oder dem Verbinder (24) gehört und das geeignet ist, in einer komplementären Aufnahme (62) aufgenommen zu werden, die in einem zweiten zugeordneten Trägerelement (60) realisiert wird, das jeweils zu dem Verbinder (24) oder dem Ende (22a) des Arms (22) gehört,
in dem das erste Trägerelement (58) und / oder das zweite Trägerelement (60) elastisch verformbare Elemente umfasst / umfassen, um die Einführung des Zapfens (56) in die zugeordnete Aufnahme (62) zu erlauben und die automatische radiale Verriegelung des Zapfens (56) in der Aufnahme (62) hervorzurufen,
in dem das erste Trägerelement (58) und das zweite Trägerelement (60) aus demselben, per Abformung aus Plastik realisiertem Material jeweils mit dem Arm (22) oder dem Verbinder (24) realisiert sind und
in dem das Ende (22a) des Arms (22) von den Artikulationsmitteln (56) unterschiedliche Positionierungsmittel (52, 84) des Verbinders in Längsrichtung umfasst,
**dadurch gekennzeichnet, dass** die Positionierungsmittel zwei vertikale transversale Rippungen (84) umfassen, die zwei laterale Wangen (50) des Endes (22a) des Arms (22) verbinden und die in Längsrichtung im Verhältnis zum Rücken (48) des Arms (22) derart verteilt sind, dass der Verbinder (24) sich in Längsrichtung zwischen den transversalen Rippungen (84) erstreckt, wenn er sich in der zwischen den Wangen (50) und dem Ende (22a) des Arms (22) angebrachten Position befindet.

2. Scheibenwischer gemäß dem vorherigen Anspruch, **dadurch gekennzeichnet, dass** die Positionierungsmittel (52, 84) sich deutlich transversal im Verhältnis zur Längsrichtung des Arms erstrecken.

3. Scheibenwischer gemäß dem vorherigen Anspruch, **dadurch gekennzeichnet, dass** der Verbinder (24) einen Abschnitt in Rampenform (80s) umfasst, der geeignet ist, mit dem unteren Rand (84i) einer Rippung (84) zusammenzuwirken, um den Verbinder (24) in Längsrichtung vor der Einführung des Zapfens (56) in die Aufnahme (62) zu positionieren.

4. Scheibenwischer gemäß einem der vorherigen Ansprüche, **dadurch gekennzeichnet, dass** der Verbinder (24) und der Arm (22) Begrenzungsmittel der Amplitude des Schwenkens des Arms (20) und des Verbinders (24) im Verhältnis zum Arm (22) um die transversale Artikulationsachse (A) umfassen.

5. Scheibenwischer gemäß Anspruch 4, **dadurch gekennzeichnet, dass** der Verbinder (24) wenigstens eine Wange (80) umfasst, von der eine obere Fläche (80s) gegen die untere Seite (48i) des Rückens (48) des Endes (22a) des Arms (22) für eine extreme Winkelposition des Wischers (20) im Verhältnis zum Arm (22) zum Anschlag kommt.

6. Scheibenwischer gemäß Anspruch 4 oder 5, **dadurch gekennzeichnet, dass** sich wenigstens eine transversale Rippung (84) des Arms (22) vertikal derart zum Arm erstreckt, dass die obere Seite (30s) der Lippe (26) gegen den unteren Anschlag (84i) der Rippung (84) für eine extreme Winkelposition des Wischers (20) im Verhältnis zum Arm (22) zum Anschlag kommt.

7. Scheibenwischer gemäß einem der vorherigen Ansprüche, **dadurch gekennzeichnet, dass** das zweite Trägerelement (60) eine elastische Klemme (64) umfasst, deren innere Seiten gegenüber den Zweigen (66) der Klemme (64) jeweils einen konkaven Abschnitt (68) umfassen, der die Aufnahme (62) zum Teil begrenzt und deren Zweige (66) global um eine transversale Achse derart artikuliert sind, dass sie sich beabstanden, um das Einführen des Zapfens (56) in die Aufnahme (62) zu erlauben.

8. Scheibenwischer gemäß dem vorherigen Anspruch, **dadurch gekennzeichnet, dass** sich die Zweige (66) der elastischen Klemme (64) global vertikal derart erstrecken, dass die Klemme (56) geeignet ist, vertikal in die zugeordnete Aufnahme (62) eingeführt zu werden.

9. Scheibenwischer gemäß Anspruch 1 bis 6, **dadurch gekennzeichnet, dass** das zweite Trägerelement (60) aus einer vertikalen Wange in Längsrichtung besteht, die eine transversale Öffnung (72) mit kreisförmigem Durchschnitt umfasst, welche die Aufnahme (62) abgrenzt.

10. Scheibenwischer gemäß dem vorherigen Anspruch, **dadurch gekennzeichnet, dass** die Wange (60) einen Abschnitt in Rampenform (74) umfasst, der sich ab dem freien Rand in Längsrichtung der Wange bis zur transversalen Öffnung (72) erstreckt, auf der sich der Zapfen (56) bei seiner Einführung in die Aufnahme (62) aufstützt, um die Verformung der elastisch verformbaren Elemente hervorzurufen.

11. Scheibenwischer gemäß dem vorherigen Anspruch, **dadurch gekennzeichnet, dass** die Wange (60) elastisch verformbar ist.

12. Scheibenwischer gemäß Anspruch 10 oder 11, **dadurch gekennzeichnet, dass** das freie Ende (56a) des Zapfens (56) abgefast ist und geeignet ist, mit dem Abschnitt in Rampenform (74) der Wange beim Einführen des Zapfens (56) in die Aufnahme (62) zusammenzuwirken.

13. Scheibenwischer gemäß einem der vorherigen Ansprüche, **dadurch gekennzeichnet, dass** das zweite Trägerelement (60) eine vertikale laterale Seite in Längsrichtung (60a) umfasst, mit der eine vertikale Seite in Längsrichtung gegenüber (58a) zusammenwirkt, die zum ersten Trägerelement (58) für die Führung des Verbinders (24) in Rotation im Verhältnis zum vorderen Ende (22a) des Arms (22) gehört.

14. Scheibenwischer gemäß Anspruch 1 bis 12, **dadurch gekennzeichnet, dass** das zweite Trägerelement (60) eine vertikale laterale Seite in Längsrichtung (60a) umfasst, mit der eine vertikale Führungsseite in Längsrichtung (78a) gegenüber zur Führung des Verbinders (24) im Verhältnis zum vorderen Ende (22a) des Arms (22) in Rotation zusammenwirkt, die zu einer Rippung (78) gehört.

15. Scheibenwischer gemäß Anspruch 13 oder 14 in Kombination mit Anspruch 7, **dadurch gekennzeichnet, dass** das zweite Trägerelement (60) wenigstens eine vertikale Wange (80) umfasst, deren laterale Seite (80a) gegenüber von dem ersten zugeordneten Trägerelement (58) transversal im Verhältnis zur Klemme (64) hervorsteht, um eine Führungsfläche in Rotation zu bilden.

16. Scheibenwischer gemäß dem vorherigen Anspruch, **dadurch gekennzeichnet, dass** der Verbinder (24) zwei vertikale Wangen, in Längsrichtung (80) umfasst, die in Längsrichtung auf jeder Seite der Klemme (64) verteilt sind, und dass die lateralen Seiten (80a) der Wangen (80), die die Führungsflächen bilden, sich in Längsrichtung auf jeder Seite des Körpers (38) des Verbinders (24) erstrecken.

17. Scheibenwischer gemäß Anspruch 15 oder 16, **dadurch gekennzeichnet, dass** das erste Trägerelement (58) und die Rippung (78) transversal auf jeder Seite des zweiten Trägerelements (60) verteilt sind.

18. Scheibenwischer gemäß einem der vorherigen Ansprüche, **dadurch gekennzeichnet, dass** das erste Trägerelement (58) ein Element des Verbinders (24) ist und dass das zweite Trägerelement (60) ein Teil des Endes (22a) des Arms (22) ist.

19. Scheibenwischer gemäß dem vorherigen Anspruch in Verbindung mit Anspruch 14, **dadurch gekennzeichnet, dass** die Rippung (78) ein Teil des Verbinders (24) ist.

20. Scheibenwischer gemäß Anspruch 1 bis 17, **dadurch gekennzeichnet, dass** das erste Trägerelement (58) ein Element des Endes (22a) des Arms (22) ist und dass das zweite Trägerelement (60) ein Teil des Verbinders (24) ist.

21. Scheibenwischer gemäß dem vorherigen Anspruch in Verbindung mit Anspruch 14, **dadurch gekennzeichnet, dass** die Rippung (78) ein Teil des Endes (22a) des Arms (22) ist.

22. Scheibenwischer gemäß einem der vorherigen Ansprüche, **dadurch gekennzeichnet, dass** der Verbinder (24) und das Ende (22a) des Arms (22) jeweils im Verhältnis zu einer und derselben vertikalen medianen Längsebene derart symmetrisch sind, dass der Verbinder (24) zwei erste Trägerelemente (58) oder zwei zweite Trägerelemente (60) umfasst und das Ende des Arms (22) umfassen und das Ende (22a) des Arms (22) jeweils zwei zweite Trägerelemente (60) oder zwei erste Trägerelement (58) umfasst.

23. Scheibenwischer gemäß dem vorherigen Anspruch in Verbindung mit Anspruch 19 oder 20, **dadurch gekennzeichnet, dass** die Rippung (78) transversal zwischen zwei zweiten Trägerelementen (60) angeordnet ist.
